# EUROPEAN PATENT APPLICATION

(11) **EP 4 787 799 A1**
(43) Date of publication of application: **05.08.2026**
(21) Application number: 24878500.8
(22) Date of filing: 04.06.2024
(51) Int. Cl.: H04L 41/50

(54) **FAULT ANALYSIS METHOD AND APPARATUS, COMPUTING DEVICE CLUSTER, AND READABLE STORAGE MEDIUM**

(30) Priority: 17.10.2023 CN 202311350375; 28.12.2023 CN 202311840267
(71) Applicant: Huawei Cloud Computing Technologies Co., Ltd., Gui'an New District, Guizhou 550025 (CN)
(72) Inventor: ZHANG, Haopeng, Guiyang, Guizhou 550025 (CN); YANG, Yi, Guiyang, Guizhou 550025 (CN); LUAN, Wenfei, Guiyang, Guizhou 550025 (CN)
(74) Representative: Grünecker Patent- und Rechtsanwälte PartG mbB
(86) International application number: PCT/CN2024/097353
(87) International publication number: WO 2025/081847

(57) **Abstract**

This application discloses a fault analysis method and apparatus, a compute device cluster, and a readable storage medium, and relates to the field of computer technologies. The method is applied to a cloud server. The cloud server is configured to run a plurality of services that have a call relationship. The method includes: obtaining a tag of a first service, where the first service is any one of the plurality of services; obtaining link call information of a related service of the first service based on the tag of the first service; and obtaining, based on the link call information, a topology diagram corresponding to the first service, and performing fault analysis on the first service based on the topology diagram corresponding to the first service. Because only the topology diagram of the first service is constructed in the method, efficiency of constructing a topology diagram is high, and efficiency of performing fault analysis on the first service based on the topology diagram is high. In addition, because the topology diagram corresponding to the first service is related only to the first service and the related service of the first service, a quantity of services during fault analysis is small, and fault analysis efficiency is high.

## Description

This application claims priorities to Chinese Patent Application No. 202311350375.6, filed on October 17, 2023 and entitled "FAULT ANALYSIS METHOD AND APPARATUS", and to Chinese Patent Application No. 202311840267.7, filed on December 28, 2023 and entitled "FAULT ANALYSIS METHOD AND APPARATUS, COMPUTE DEVICE CLUSTER, AND READABLE STORAGE MEDIUM", both of which are incorporated herein by reference in their entireties.

### TECHNICAL FIELD

This application relates to the field of computer technologies, and in particular, to a fault analysis method and apparatus, a compute device cluster, and a readable storage medium.

### BACKGROUND

With continuous development of computer technologies, constructing an application based on a microservice architecture becomes a common application constructing manner. The application constructed based on the microservice architecture may be referred to as a microservice system. The microservice system includes a plurality of services that have a call relationship, and a running process of the application is a process of calling the plurality of services based on the call relationship. As complexity of the call relationship in the microservice system continuously increases, it is increasingly difficult to perform fault analysis on the service in the microservice system. Therefore, how to quickly perform fault analysis on the service is an urgent problem to be resolved.

In a related technology, fault analysis is performed on each service in the microservice system based on a call link. For example, in a process of performing fault analysis on any service in the microservice system, a service identifier, a call relationship, and execution time of each service in the microservice system are first obtained based on call link data of the microservice system. The call link is a link including the plurality of services that have the call relationship, and the call link data is data of the service on the call link. Then, a topology diagram of the microservice system is constructed based on the obtained service identifier, call relationship, and execution time. One node in the topology diagram corresponds to one service. Then, fault analysis is performed on the any service based on the topology diagram of the microservice system.

However, in a solution of the related technology, for each service on which fault analysis is to be performed, the topology diagram of the entire microservice system needs to be constructed to perform fault analysis. Consequently, efficiency of performing fault analysis on a single service in the microservice system is low in the solution.

### SUMMARY

This application provides a fault analysis method and apparatus, a compute device cluster, and a readable storage medium, to improve efficiency of performing fault analysis on a single service.

According to a first aspect, a fault analysis method is provided. The method is applied to a cloud server, and the cloud server is configured to run a plurality of services that have a call relationship. The method includes: obtaining a tag of a first service, where the tag identifies the first service, and the first service is any one of the plurality of services; obtaining link call information of a related service of the first service based on the tag of the first service, where the related service includes one or both of the following: a second service that is in the plurality of services and that needs to call the first service, and a third service that is in the plurality of services and that needs to be called by the first service; and obtaining, based on the link call information, a topology diagram corresponding to the first service, and performing fault analysis on the first service based on the topology diagram corresponding to the first service.

In the method, for any service in a microservice system, only a topology diagram of the service is constructed, so that efficiency of constructing the topology diagram is high, and efficiency of performing fault analysis on the service based on the topology diagram is high. In addition, because the topology diagram corresponding to the service is related only to the service and a related service of the service, a quantity of services during fault analysis is small, and fault analysis efficiency is high. In addition, in comparison with a manner of collecting information about a link including all services in the microservice system to construct a topology diagram, in the method, only information about a link related to a part of services is collected to construct a topology diagram, and impact on performance of the microservice system is small.

In a possible implementation, the topology diagram corresponding to the first service is obtained only based on the link call information of the related service of the first service. Therefore, in comparison with a manner of constructing the topology diagram based on the information about the link including all the services in the microservice system, in the method, efficiency of constructing the topology diagram corresponding to the first service is high.

In a possible implementation, the performing fault analysis on the first service based on the topology diagram corresponding to the first service includes: obtaining first running data of the first service, and obtaining, based on the first running data, a type of a fault that occurs in the first service; and performing fault analysis on the first service based on the type of the fault and the topology diagram corresponding to the first service. The type of the fault that occurs in the first service is obtained, so that a service related to the type can be determined in the topology diagram corresponding to the first service based on the type of the fault, to narrow down a service range for performing fault analysis on the first service, and improve the fault analysis efficiency.

In a possible implementation, the fault analysis includes determining a service affected by the fault, and the performing fault analysis on the first service based on the type of the fault and the topology diagram corresponding to the first service includes: determining, based on the type of the fault in a plurality of services corresponding to the topology diagram, the service affected by the fault. According to the method, the service affected by the fault that occurs in the first service can be determined. That is, an explosion radius of the first service can be determined. In addition, because the topology diagram corresponding to the first service is related only to the first service and the related service of the first service, efficiency of determining the explosion radius is high.

In a possible implementation, the fault analysis further includes analyzing a cause of the fault that occurs, and after the determining, in the plurality of services corresponding to the topology diagram, the service affected by the fault, the method further includes: obtaining second running data of the affected service; and analyzing, based on the first running data and the second running data, the cause of the fault that occurs in the first service. According to the method, root cause locating can be performed on the fault when the fault occurs in the first service. In addition, because the topology diagram corresponding to the first service is related only to the first service and the related service of the first service, efficiency of root cause locating is high.

In a possible implementation, obtaining the tag of the first service further includes: obtaining a tag exploration instruction, where the tag exploration instruction instructs to perform tag exploration on the first service; and performing, based on the tag exploration instruction, the operation of obtaining the tag of the first service. Therefore, an occasion for triggering obtaining of the tag of the first service can be controlled by controlling an occasion for obtaining the tag exploration instruction, so that the occasion for obtaining the tag of the first service better meets a requirement.

In a possible implementation, when the related service of the first service includes the second service, obtaining the link call information of the related service of the first service based on the tag of the first service includes: sending a first response message to the second service, where the first response message is obtained based on a first request message sent by the second service to the first service, and the first response message includes the tag of the first service; and receiving link call information fed back by the second service based on the first response message.

The second service is an upstream service of the first service. In other words, in the method, link call information of the upstream service of the first service can be obtained. Subsequently, an upstream topology diagram of the first service can be obtained based on the link call information of the upstream service. The upstream topology diagram of the first service includes the first service, the upstream service of the first service, and a call relationship between the first service and the upstream service of the first service. When there are a plurality of upstream services, the upstream topology diagram further includes a call relationship between the plurality of upstream services. Therefore, the call relationship included in the upstream topology diagram of the first service is comprehensive.

In a possible implementation, when the related service of the first service includes the third service, obtaining the link call information of the related service of the first service based on the tag of the first service includes: sending a second request message to the third service, where the second request message includes the tag of the first service; and receiving link call information fed back by the third service based on the second request message.

The third service is a downstream service of the first service. In other words, in the method, link call information of the downstream service of the first service can be obtained. Subsequently, a downstream topology diagram of the first service can be obtained based on the link call information of the downstream service. The downstream topology diagram of the first service includes the first service, the downstream service of the first service, and a call relationship between the first service and the downstream service of the first service. When there are a plurality of downstream services, the downstream topology diagram further includes a call relationship between the plurality of downstream services. Therefore, the call relationship included in the downstream topology diagram of the first service is comprehensive.

In a possible implementation, the cloud server includes a graph database, there are a plurality of related services, and after obtaining the link call information of the related service of the first service, the method further includes: storing link call information of the plurality of related services in the graph database in a sequence of obtaining the link call information of the plurality of related services; and obtaining, based on the link call information, the topology diagram corresponding to the first service includes: when a quantity of the link call information stored in the graph database is greater than or equal to two, reading the stored link call information from the graph database, and obtaining, based on the read link call information, the topology diagram corresponding to the first service.

Because information stored in the graph database is applicable to generating the topology diagram, when the link call information of the related service is stored in the graph database, efficiency of subsequently obtaining the topology diagram based on the link call information read from the graph database is high. In addition, because the link call information of the related service is related only to the first service and the related service of the first service, a data amount of the link call information is small. Therefore, a small quantity of storage resources are needed for storing the link call information.

In a possible implementation, the tag includes a key-value pair, a key in the key-value pair identifies the tag, and a value in the key-value pair includes internet protocol (internet protocol, IP) address information and port information of the first service. Therefore, the tag of the first service can uniquely identify the first service.

In a possible implementation, the link call information includes one or more of the following: a uniform resource locator, source IP address information, source port information, destination IP address information, destination port information, time consumed, and a response result. Content of the link call information is rich and flexible.

According to a second aspect, a fault analysis apparatus is provided. The apparatus is used in a cloud server, the cloud server is configured to run a plurality of services that have a call relationship, and the apparatus includes an obtaining module and an analysis module. The obtaining module is configured to obtain a tag of a first service, where the tag identifies the first service, and the first service is any one of the plurality of services. The obtaining module is further configured to obtain link call information of a related service of the first service based on the tag of the first service, where the related service includes one or both of the following: a second service that is in the plurality of services and that needs to call the first service, and a third service that is in the plurality of services and that needs to be called by the first service. The analysis module is configured to: obtain, based on the link call information, a topology diagram corresponding to the first service, and perform fault analysis on the first service based on the topology diagram corresponding to the first service.

In a possible implementation, the topology diagram corresponding to the first service is obtained only based on the link call information of the related service of the first service.

In a possible implementation, the analysis module is configured to: obtain first running data of the first service, and obtain, based on the first running data, a type of a fault that occurs in the first service; and perform fault analysis on the first service based on the type of the fault and the topology diagram corresponding to the first service.

In a possible implementation, the fault analysis includes determining a service affected by the fault, and the analysis module is configured to determine, based on the type of the fault in a plurality of services corresponding to the topology diagram, the service affected by the fault.

In a possible implementation, the fault analysis further includes analyzing a cause of the fault, and the analysis module is further configured to: obtain second running data of the affected service; and analyze, based on the first running data and the second running data, the cause of the fault that occurs in the first service.

In a possible implementation, the obtaining module is further configured to: obtain a tag exploration instruction, where the tag exploration instruction instructs to perform tag exploration on the first service; and perform, based on the tag exploration instruction, the operation of obtaining the tag of the first service.

In a possible implementation, when the related service of the first service includes the second service, the obtaining module is configured to: send a first response message to the second service, where the first response message is obtained based on a first request message sent by the second service to the first service, and the first response message includes the tag of the first service; and receive link call information fed back by the second service based on the first response message.

In a possible implementation, when the related service of the first service includes the third service, the obtaining module is configured to: send a second request message to the third service, where the second request message includes the tag of the first service; and receive link call information fed back by the third service based on the second request message.

In a possible implementation, the cloud server includes a graph database, there are a plurality of related services, and the obtaining module is further configured to store link call information of the plurality of related services in the graph database in a sequence of obtaining the link call information of the plurality of related services. The analysis module is configured to: when a quantity of the link call information stored in the graph database is greater than or equal to two, read the stored link call information from the graph database, and obtain, based on the read link call information, the topology diagram corresponding to the first service.

In a possible implementation, the tag includes a key-value pair, a key in the key-value pair identifies the tag, and a value in the key-value pair includes IP address information and port information of the first service.

In a possible implementation, the link call information includes one or more of the following: a uniform resource locator, source IP address information, source port information, destination IP address information, destination port information, time consumed, and a response result.

According to a third aspect, a compute device cluster is provided. The compute device cluster includes at least one compute device, and each compute device includes a processor and a memory. A processor of the at least one compute device is configured to execute instructions stored in a memory of the at least one compute device, to cause the compute device cluster to perform any fault analysis method in the first aspect.

According to a fourth aspect, a computer-readable storage medium is provided. The computer-readable storage medium includes computer program instructions. When the computer program instructions are executed by a compute device cluster, the compute device cluster performs any fault analysis method in the first aspect.

According to a fifth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive and send a signal. The processor is configured to run a plurality of services that have a call relationship. When the processor executes the instructions stored in the memory, the processor is caused to perform any fault analysis method in the first aspect.

For example, there are one or more processors, and there are one or more memories.

For example, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner of disposing the memory and the processor are not limited in this application.

According to a sixth aspect, a computer program product including instructions is provided. When the instructions are run by a compute device cluster, the compute device cluster is caused to perform any fault analysis method in the first aspect.

According to a seventh aspect, a chip is provided. The chip includes a processor, and the processor is configured to invoke, from a memory, instructions stored in the memory and run the instructions, to cause at least one compute device on which the chip is installed to perform any fault analysis method in the first aspect. For example, the chip further includes an input interface, an output interface, and the memory. The input interface, the output interface, the processor, and the memory are connected to each other through an internal connection path.

It should be understood that, for beneficial effects achieved by the technical solutions in the second aspect to the seventh aspect and the corresponding possible implementations of the second aspect to the seventh aspect in this application, refer to the technical effects of the first aspect and the corresponding possible implementations of the first aspect. Details are not described herein again.

### BRIEF DESCRIPTION OF DRAWINGS

FIG. 1A and FIG. 1B are a service topology diagram constructed in a related technology;
FIG. 2 is a diagram of an implementation environment according to an embodiment of this application;
FIG. 3 is a diagram of an architecture of a cloud server according to an embodiment of this application;
FIG. 4 is a flowchart of a fault analysis method according to an embodiment of this application;
FIG. 5 is a diagram of a process of sending a first response message to a second service according to an embodiment of this application;
FIG. 6 is a diagram of a process of sending a second request message to a third service according to an embodiment of this application;
FIG. 7 is a diagram of a tag exploration process according to an embodiment of this application;
FIG. 8 is a diagram of an upstream topology diagram according to an embodiment of this application;
FIG. 9 is a diagram of a downstream topology diagram according to an embodiment of this application;
FIG. 10A and FIG. 10B are a diagram of a topology diagram corresponding to a first service according to an embodiment of this application;
FIG. 11A and FIG. 11B are a diagram of a determined and affected service according to an embodiment of this application;
FIG. 12 is a diagram of a structure of a fault analysis apparatus according to an embodiment of this application;
FIG. 13 is a diagram of a structure of a compute device according to an embodiment of this application; and
FIG. 14 is a diagram of connection of a compute device according to an embodiment of this application.

### DESCRIPTION OF EMBODIMENTS

Terms used in implementations of this application are merely used to explain embodiments of this application, but are not intended to limit this application. The following describes embodiments of this application with reference to the accompanying drawings.

For ease of understanding, the terms in embodiments of this application are first described.
(1) Traffic tag: The traffic tag is a tag identifying network traffic, and is usually used for network traffic analysis and management. Network administrators can identify and classify network traffic based on traffic tags to monitor and manage network performance and ensure network security.
(2) Root cause locating: The root cause locating is an operation of finding, through analysis and troubleshooting, a root cause of a problem that occurs in a microservice system when the problem or a fault occurs in the microservice system.
(3) Explosion radius: The explosion radius is a range of other services that may be affected when a fault occurs in a service or a service needs to be modified in a microservice system.

With increasing popularization of a cloud native (cloud native) technology, a distributed technology used to implement the cloud native technology develops rapidly, and a microservice (microservice) architecture implemented based on the distributed technology is gradually widely used. The microservice architecture can be used to construct an application, and the application constructed based on the microservice architecture includes a plurality of services that have a call relationship. The application constructed based on the microservice architecture may be referred to as a microservice system, and each service included in the microservice system may be referred to as a microservice. As complexity of the application continuously increases, a call depth of the microservice system continuously increases, and complexity of a call relationship in the microservice system continuously increases. Therefore, when a fault occurs in the microservice system, how to quickly perform fault analysis on the service in the microservice system is an urgent problem to be resolved. The fault analysis includes but is not limited to one or both of the following: root cause locating and explosion radius determining. In this application, occurrence of a fault may also be understood as occurrence of an exception. In other words, the fault analysis in this application may also be understood as exception analysis.

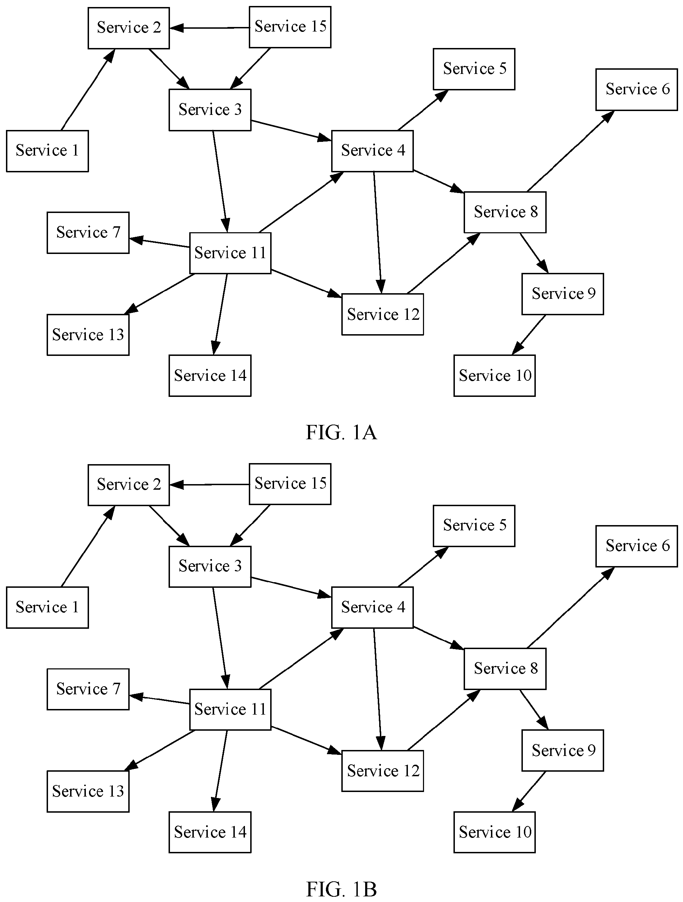

In a related technology, root cause locating is performed on each service in the microservice system based on a call link. For example, in the related technology, call link data in the microservice system is obtained in real time, the call link data is converted into a service indicator, and the service indicator is monitored in real time. The service indicator includes but is not limited to a service identifier, a call relationship, and execution time. When it is found, based on a detected service indicator, that an exception occurs in the microservice system, in a process of performing fault analysis on any service in the microservice system, call link data in a time period in which the exception occurs is first used to construct a service topology diagram, a process topology diagram, and a host topology diagram. FIG. 1A and FIG. 1B are a service topology diagram constructed in a related technology. FIG. 1A shows a plurality of services included in a microservice system and a call relationship between the plurality of services. FIG. 1B is a constructed service topology diagram. Then, for any service in the microservice system, an exception score of each node on a call link related to the any service in the topology diagram is calculated based on call link data of each call link related to the any service. Then, based on the exception score of each node in the topology diagram, a root cause node is located in descending order of a call depth and in a sequence of process first and then host, to implement root cause locating. The located root cause node may be a process node or a host node.

However, when the solution in the related technology is used to perform root cause locating, massive data needs to be stored and aggregated, for example, call link data of all links in the microservice system. Consequently, a large quantity of storage resources are needed for storing the data. In addition, in the related technology, for any service in the microservice system, a topology diagram of an entire microservice system needs to be constructed to perform root cause locating. Consequently, efficiency of performing root cause locating on a single service is low. In addition, for the any service, a call link related to each service in the microservice system needs to be first obtained based on the service topology diagram, and then root cause locating is performed based on the call link data of each call link related to the any service. Consequently, efficiency of performing root cause locating is low. In addition, in the solution in the related technology, data of all the links in the microservice system needs to be collected, and impact on performance of the microservice system is great.

In another related technology, root cause locating is performed on each service in the microservice system based on monitoring data. For example, in the related technology, a topology diagram of the call relationship in the microservice system is generated based on full monitoring data. The monitoring data includes but is not limited to a central processing unit (central processing unit, CPU) usage status, a memory usage status, a network status, a disk input/output (input/output, I/O) status, a quantity of application requests, and average service response duration. Then, exception monitoring is performed on the monitoring data based on a start point in the topology diagram, and a data type to which the monitoring data belongs is analyzed, to obtain a data tag of the data type. The monitoring data is analyzed, obtained data tags are sorted, and exceptional monitoring data and a service in which the monitoring data is located are determined based on a sorting status of the data tags, to implement root cause locating.

However, when the solution in the related technology is used to perform root cause locating, massive data also needs to be stored and aggregated, for example, the CPU usage status, the memory usage status, the network status, the disk I/O status, the quantity of application requests, and the average service response duration. Consequently, when an exception occurs in the microservice system, efficiency of performing root cause locating based on the massive data is low.

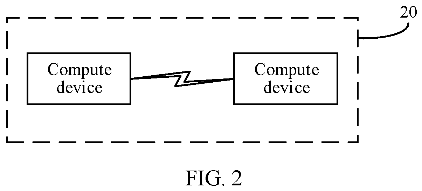

Embodiments of this application provide a fault analysis method, to improve efficiency of performing fault analysis on a service in a microservice system. FIG. 2 is a diagram of an implementation environment of a fault analysis method according to an embodiment of this application. The implementation environment is a compute device cluster 20, and the compute device cluster 20 includes at least one compute device. When the compute device cluster 20 includes a plurality of compute devices, the plurality of compute devices may be communicatively connected to each other in a manner of a wired or wireless network. Further, when the compute device cluster 20 includes a plurality of compute devices, the fault analysis method provided in this embodiment of this application may be independently performed by one compute device in the compute device cluster 20, or may be performed by a plurality of compute devices included in the compute device cluster 20 through interaction. A quantity of compute devices included in the compute device cluster 20 is not limited in this embodiment of this application. In FIG. 2, only two compute devices are used as an example for description. For example, the compute device included in the compute device cluster 20 is a terminal or a server. The terminal includes but is not limited to a desktop computer, a notebook computer, a smartphone, or the like. The server includes but is not limited to a physical server or a cloud server that provides a cloud computing service.

For example, when the method provided in this embodiment of this application is applied to a cloud server, the cloud server includes a configuration center, a tag exploration apparatus, a data storage apparatus, a database, and a data analysis apparatus. In a possible implementation, a computer program is run on the cloud server, and the configuration center, the tag exploration apparatus, the data storage apparatus, the database, and the data analysis apparatus are all implemented by the cloud server by running the computer program. That is, the configuration center, the tag exploration apparatus, the data storage apparatus, the database, and the data analysis apparatus are all implemented by software.

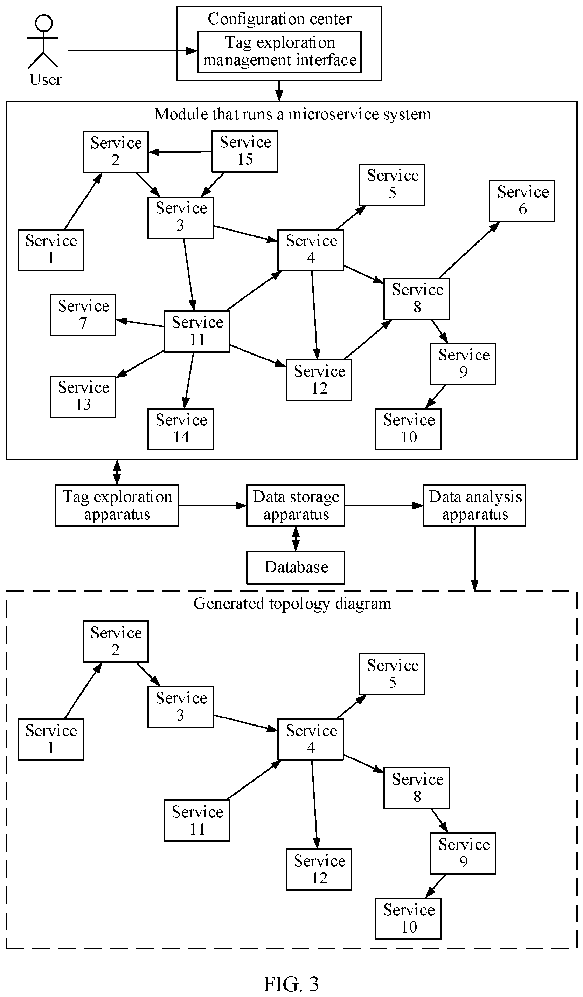

FIG. 3 is a diagram of an architecture of a cloud server according to an embodiment of this application. As shown in FIG. 3, a configuration center includes a tag exploration management interface, the configuration center is connected to a tag exploration apparatus, and a data storage apparatus is separately connected to the tag exploration apparatus, a database, and a data analysis apparatus. A connection relationship between the configuration center and the tag exploration apparatus is not shown in FIG. 3. The cloud server further includes a module configured to run a microservice system. In other words, the cloud server further includes a module configured to run a plurality of services that have a call relationship. The module may be a module that runs the microservice system shown in FIG. 3. The module may be connected to the tag exploration apparatus as shown in FIG. 3, or the module may include the tag exploration apparatus. In a possible implementation, the tag exploration management interface is used to implement interaction between a user and the cloud server, and the configuration center is configured to manage a tag exploration switch of a service in the microservice system. For example, the user selects, on the tag exploration management interface, a service on which tag exploration needs to be performed. After obtaining the service selected by the user on the tag exploration management interface, the configuration center modifies configuration information in the configuration center based on the service selected by the user, to enable the tag exploration switch of the service. When the tag exploration switch of the service is enabled, the configuration center indicates the tag exploration apparatus to start to explore upstream and downstream services of the service. The upstream service of the service is a service that needs to call the service, and the upstream service of the service is also referred to as a consumer end of the service. The downstream service of the service is a service called by the service, and the downstream service of the service is also referred to as a provider end of the service.

For example, the configuration center is a zookeeper (a centralized service management framework), and the configuration center may indicate, by sending an exploration instruction to the tag exploration apparatus, the tag exploration apparatus to start to explore upstream and downstream of the service. The tag exploration apparatus is configured to perform two operations: tag transparent transmission and tag collection. The tag transparent transmission means that after the tag exploration switch of the service is enabled, a tag of the service is added to a message sent by the service, and a tag transferred by another service to the service continues to be transferred to a service on a same link. For example, when a message is sent to the upstream service, the message is a response message, and when a message is sent to the downstream service, the message is a request message. Regardless of which type of message is sent, a tag that is of the service and that is added to the message may be a traffic tag of the service.

The tag collection includes collecting link call information during tag transfer, or a tag transferred in a message and link call information during tag transfer, and the tag collection further includes reporting the collected tag and link call information to the data storage apparatus. For example, services in the microservice system call each other through an application programming interface (application programming interface, API). When the tag and the link call information are collected, the tag exploration apparatus may aggregate the tag and the link call information to obtain aggregation information, and report the aggregation information to the data storage apparatus. Because the services call each other through the API, a process of collecting the tag and the link call information may be referred to as a process of collecting the tag and the link call information at a granularity of the API, and a process of aggregating the tag and the link call information may be referred to as a process of aggregating the tag and the link call information at the granularity of the API.

For example, the data storage apparatus in FIG. 3 is configured to store the reported information in the database in a sequence of the information reported by the tag exploration apparatus, and the data storage apparatus is further configured to: read the stored information from the database, and provide the information for the data analysis apparatus to perform fault analysis. The information includes the link call information, or the tag and the link call information. The data analysis apparatus is configured to: analyze the information read from the database, and generate, based on the read information, a topology diagram corresponding to the service, that is, a topology diagram of a call relationship related to the service. The data analysis apparatus is further configured to perform fault analysis based on the topology diagram corresponding to the service when a problem occurs in the service. The fault analysis includes but is not limited to one or both of the following: explosion radius determining and root cause locating.

Still refer to FIG. 3. The microservice system run by the cloud server includes a service 1 to a service 15. For example, tag exploration is performed on the service 4. After the user interacts with the cloud server by using the tag exploration management interface to start tag exploration on the service 4, the tag exploration apparatus performs operations of tag transparent transmission and tag collection to explore an upstream service and a downstream service of the service 4. The tag exploration apparatus reports information to the data storage apparatus. The reported information includes link call information, or a tag of the service 4 and link call information. The data storage apparatus stores the reported information in the database in a sequence of the reported information, and further reads the stored information from the database and provides the read information for the data analysis apparatus. Then, the data analysis apparatus analyzes the read information and generates a topology diagram corresponding to the service 4. In this embodiment of this application, after the topology diagram corresponding to the service 4 is obtained, if a fault occurs in the service 4, an impact range of the fault that occurs in the service 4 may be learned based on the topology diagram corresponding to the service 4. That is, an explosion radius of the service 4 is obtained. After the topology diagram corresponding to the service 4 is obtained, if the fault occurs in the service 4, a range of root cause locating may also be narrowed down based on the topology diagram corresponding to the service 4, to improve efficiency of root cause locating.

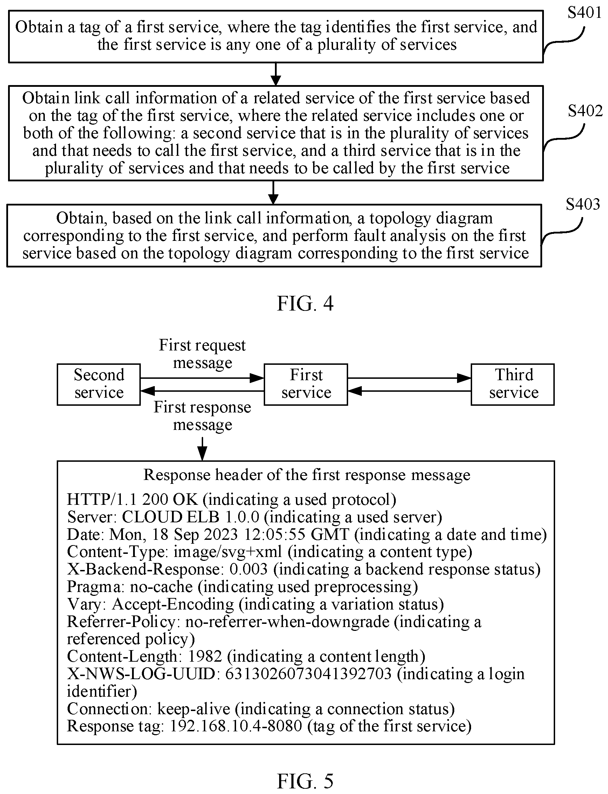

The fault analysis method provided in embodiments of this application may be shown in FIG. 4. The following describes the method with reference to the implementation environment shown in FIG. 2. The method may be applied to the compute device cluster shown in FIG. 2. In other words, the method may be applied to a cloud server, and the cloud server is configured to run a plurality of services that have a call relationship. As shown in FIG. 4, the method includes but is not limited to S401 to S403.

S401: Obtain a tag of a first service, where the tag identifies the first service, and the first service is any one of the plurality of services.

In a possible implementation, the first service is a service that is selected by a user by using a tag exploration management interface and on which tag exploration needs to be performed, and the tag of the first service may be a traffic tag. For example, the tag exploration management interface is a console (console) page. The plurality of services that are run by the cloud server and that have the call relationship are displayed on the console page, and the user selects, on the console page from the plurality of displayed services, the first service on which tag exploration needs to be performed. For example, the cloud server includes a configuration center, and the configuration center includes the tag exploration management interface. After the user selects the first service by using the tag exploration management interface, the configuration center modifies configuration information in the configuration center based on the first service, to enable a tag exploration switch of the first service. In this way, the configuration center can indicate a tag exploration apparatus to start to explore upstream and downstream services of the first service.

For example, the configuration center sends a tag exploration instruction to the tag exploration apparatus, where the tag exploration instruction instructs to perform tag exploration on the first service. In this embodiment of this application, performing tag exploration on the first service means exploring the upstream and downstream services of the first service based on the tag of the first service. In other words, the tag exploration instruction instructs to explore the upstream and downstream services of the first service based on the tag of the first service. For example, obtaining the tag of the first service further includes: obtaining the tag exploration instruction, where the tag exploration instruction instructs to perform tag exploration on the first service; and performing, based on the tag exploration instruction, the operation of obtaining the tag of the first service. Therefore, an occasion for triggering obtaining of the tag of the first service can be controlled by controlling an occasion for obtaining the tag exploration instruction, so that the occasion for obtaining the tag of the first service better meets a requirement.

In some embodiments, obtaining the tag of the first service includes: obtaining the tag of the first service based on IP address information and port information of the first service. The tag of the first service is obtained based on the IP address information and the port information of the first service, and the tag of the first service can uniquely identify the first service. For example, the tag of the first service includes a key-value pair, a key (key) in the key-value pair identifies the tag, and a value (value) in the key-value pair includes the IP address information and the port information of the first service.

In a possible implementation, the cloud server includes a plurality of instances, one instance is used to run one process, and each service included in the cloud server corresponds to at least one process. In other words, the cloud server may include a module configured to run the plurality of services that have a call relationship. The module includes the plurality of instances, and each of the plurality of services is implemented by running a process by using at least one of the plurality of instances. In this case, the IP address information of the first service includes IP address information of an instance for running a process corresponding to the first service, and the port information of the first service includes port information of the instance for running the process corresponding to the first service.

For example, after the tag of the first service is obtained, the tag of the first service is sent to the upstream service and/or the downstream service of the first service. A key in a tag that is of the first service and that is sent to the upstream service is the same as or different from a key in a tag that is of the first service and that is transferred to the downstream service. When the key in the tag that is of the first service and that is sent to the upstream service is different from the key in the tag that is of the first service and that is transferred to the downstream service, the key in the tag of the first service can indicate whether the tag of the first service is sent to the upstream service or to the downstream service. Further, an upstream topology diagram and/or a downstream topology diagram of the first service can be subsequently obtained based on the tag of the first service. For related content of obtaining the topology diagram, refer to content in S403 below. Details are not described herein. For example, the key in the tag that is of the first service and that is transferred to the upstream service is a response tag (response tag), and the key in the tag that is of the first service and that is transferred to the downstream service is a request tag (request tag).

S402: Obtain link call information of a related service of the first service based on the tag of the first service, where the related service includes one or both of the following: a second service that is in the plurality of services and that needs to call the first service, and a third service that is in the plurality of services and that needs to be called by the first service.

A service that needs to call the first service is the upstream service of the first service. That is, the second service is the upstream service of the first service. A service that needs to be called by the first service is the downstream service of the first service. That is, the third service is the downstream service of the first service. In a possible implementation, when the related service of the first service includes the second service, obtaining the link call information of the related service of the first service based on the tag of the first service includes: sending a first response message to the second service, where the first response message is obtained based on a first request message sent by the second service to the first service, and the first response message includes the tag of the first service; and receiving link call information fed back by the second service based on the first response message. For example, the first response message includes a response header, and the response header includes the tag of the first service.

In some embodiments, the sending the first response message to the second service includes: obtaining an initial response message obtained based on the first request message, adding tag information of the first service to the initial response message to obtain the first response message, and sending the first response message to the second service. The initial response message is used to respond to content requested by using the first request message. For example, the adding the tag information of the first service to the initial response message to obtain the first response message includes: adding the tag information of the first service to the initial response message in a bytecode enhancement manner, to obtain the first response message. In other words, the initial response message is modified in the bytecode enhancement manner, to add the tag information of the first service to the initial response message, to obtain the first response message.

For example, when the cloud server includes a module that runs the first service, the module further includes the tag exploration apparatus, and the tag exploration apparatus may be referred to as a tag exploration apparatus included in the first service. The initial response message is generated by the first service. The tag exploration apparatus intercepts an interface for sending a message by the first service, to obtain the initial response message, adds the tag information of the first service to the initial response message to obtain the first response message, and then sends the first response message to the second service. A manner of intercepting, by the tag exploration apparatus, the interface for sending the message by the first service is not limited in this embodiment of this application. For example, the first service is implemented by running the process by using the instance in the cloud server, and the tag exploration apparatus is implemented by using a computer program run on the instance. In addition, the computer program can intercept a message sent through an interface of the process, so that the tag exploration apparatus can intercept the interface for sending the message by the first service, to obtain the initial response message.

In a possible implementation, transmission of a request message and a response message is performed between the plurality of services that have the call relationship by using a hypertext transfer protocol (hypertext transfer protocol, HTTP) or a remote procedure call (remote procedure call, RPC) protocol. In other words, both the first response message and the first request message may be messages that comply with the HTTP or messages that comply with the RPC protocol. FIG. 5 is a diagram of a process of sending a first response message to a second service according to an embodiment of this application. As shown in FIG. 5, the related service of the first service includes the second service and the third service. The first service receives the first request message sent by the second service, and then the tag exploration apparatus associated with the first service sends the first response message to the second service. The tag exploration apparatus is not shown in FIG. 5, and the related operation of sending the first response message is summarized by the operation of sending the first response message to the second service in FIG. 5. FIG. 5 shows content of the response header of the first response message.

For example, after receiving the first response message, the second service feeds back the link call information based on the first response message. For example, when the cloud server includes a data storage apparatus, the data storage apparatus receives the link call information fed back by the second service based on the first response message. In a possible implementation, the second service includes a tag exploration apparatus, and the second service implements, by using the tag exploration apparatus included in the second service, the operation of feeding back the link call information. For example, similar to the first service, the second service is implemented by running a process by using an instance in the cloud server, and the tag exploration apparatus included in the second service is implemented by using a computer program run on the instance. In addition, the computer program can intercept a message received through an interface of the process, so that the tag exploration apparatus can intercept an interface for receiving a message by the second service, to obtain the link call information. In this way, the tag exploration apparatus included in the second service can send the link call information to the data storage apparatus.

In this embodiment of this application, the link call information includes but is not limited to one or more of the following: a uniform resource locator (uniform resource locator, URL), source IP address information, source port information, destination IP address information, destination port information, time consumed, and a response result. For example, in the link call information fed back by the second service, the URL identifies a service type provided by the first service, the source IP address information indicates the IP address information of the first service, the source port information indicates the port information of the first service, the destination IP address information indicates IP address information of the second service, the destination port information indicates port information of the second service, the time consumed indicates time for transmission of the first response message, and the response result indicates a status of the first response message. For example, the response result includes one or more of the following: an error rate, a requested throughput, an identifier (identifier, ID) of the process corresponding to the first service, and a timestamp.

In a possible implementation, when the related service of the first service includes the third service, obtaining the link call information of the related service of the first service based on the tag of the first service includes: sending a second request message to the third service, where the second request message includes the tag of the first service; and receiving link call information fed back by the third service based on the second request message. For example, the second request message includes a request header, and the request header includes the tag of the first service. In some embodiments, the sending the second request message to the third service includes: obtaining an initial request message, adding the tag information of the first service to the initial request message to obtain the second request message, and sending the second request message to the third service.

In some embodiments, similar to a manner of obtaining the first response message, the adding the tag information of the first service to the initial request message to obtain the second request message includes: adding the tag information of the first service to the initial request message in the bytecode enhancement manner, to obtain the second request message. In other words, the initial request message is modified in the bytecode enhancement manner, to add the tag information of the first service to the initial request message, to obtain the second request message.

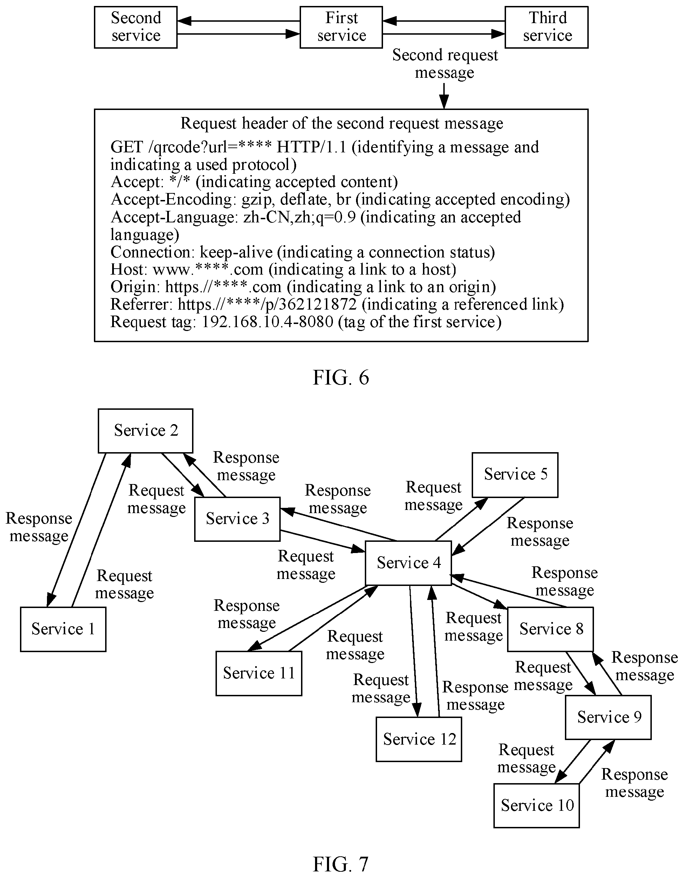

For example, when the first service includes the tag exploration apparatus, the initial request message is generated by the first service. The tag exploration apparatus intercepts the interface for sending the message by the first service, to obtain the initial request message, adds the tag information of the first service to the initial request message to obtain the second request message, and then sends the second request message to the third service. Similar to the first response message and the first request message, the second request message may be a message that complies with the HTTP or a message that complies with the RPC protocol. FIG. 6 is a diagram of a process of sending a second request message to a third service according to an embodiment of this application. As shown in FIG. 6, the related service of the first service includes the second service and the third service. The tag exploration apparatus included in the first service sends the second request message to the third service. The tag exploration apparatus is not shown in FIG. 6, and the related operation of sending the second request message is summarized by the operation of sending the second request message to the third service in FIG. 6. FIG. 6 shows content of the request header of the second request message.

In a possible implementation, after receiving the second request message, the third service feeds back the link call information based on the second request message. For example, when the cloud server includes the data storage apparatus, the data storage apparatus receives the link call information fed back by the third service based on the second request message. For example, the third service includes a tag exploration apparatus, and the third service implements, by using the tag exploration apparatus included in the third service, the operation of feeding back the link call information. For example, similar to the second service, the third service is implemented by running a process by using an instance in the cloud server, and the tag exploration apparatus included in the third service is implemented by using a computer program run on the instance. In addition, and the computer program can intercept a message received through an interface of the process, so that the tag exploration apparatus can intercept an interface for receiving a message by the third service, to obtain the link call information. In this way, the tag exploration apparatus included in the third service can send the link call information to the data storage apparatus.

For example, in the link call information fed back by the third service, a URL identifies the service type provided by the first service, source IP address information indicates the IP address information of the first service, source port information indicates the port information of the first service, destination IP address information indicates IP address information of the third service, destination port information indicates port information of the third service, time consumed indicates time for transmission of the second request message, and a response result indicates a status of the second request message. For example, the response result includes one or more of the following: an error rate, a requested throughput, the ID of the process corresponding to the first service, and a timestamp.

FIG. 7 is a diagram of a tag exploration process according to an embodiment of this application. In FIG. 7, an example in which the first service is a service 4 is used. In this case, a response message sent by the service 4 to an upstream service includes a tag of the service 4, and a request message sent by the service 4 to a downstream service includes the tag of the service 4. Further, as shown in FIG. 7, both the upstream service and the downstream service of the service 4 can transparently transmit the tag of the service 4. In other words, the upstream service of the service 4 can continue to send a response message to an upstream service of the upstream service, and the response message includes the tag of the service 4; and the downstream service of the service 4 can continue to send a request message to a downstream service of the downstream service, and the request message includes the tag of the service 4. For example, in FIG. 7, the upstream service of the service 4 includes a service 3, an upstream service of the service 3 includes a service 2, and a response message sent by the service 3 to the service 2 includes the tag of the service 4. For another example, in FIG. 7, the downstream service of the service 4 includes a service 8, a downstream service of the service 8 includes a service 9, and a request message sent by the service 8 to the service 9 includes the tag of the service 4.

For example, in this embodiment of this application, the second service that needs to call the first service includes but is not limited to one or both of the following: a service that directly calls the first service and a service that indirectly calls the first service. Indirectly calling the first service means calling the service that directly calls the first service. For example, in FIG. 7, if the service 4 is the first service, and both the service 3 and a service 11 directly call the service 4, both the service 3 and the service 11 are second services that need to call the first service. If the service 2 directly calls the service 3, the service 2 is a service that indirectly calls the service 4, and the service 2 is also the second service that needs to call the first service. If a service 1 directly calls the service 2, the service 1 is also a service that indirectly calls the service 4, and the service 1 is also the second service that needs to call the first service.

Similarly, the third service that needs to be called by the first service includes but is not limited to one or both of the following: a service directly called by the first service and a service indirectly called by the first service. Being indirectly called by the first service means being called by the service directly called by the first service. For example, in FIG. 7, if a service 5, the service 8, and a service 12 are all services directly called by the first service, the service 5, the service 8, and the service 12 are all third services that need to be called by the first service. If the service 8 directly calls the service 9, the service 9 is a service indirectly called by the service 4, and the service 9 is also the third service that needs to be called by the first service. If the service 9 directly calls a service 10, the service 10 is also a service indirectly called by the service 4, and the service 10 is also the third service that needs to be called by the first service.

For example, after obtaining the tag of the first service, the related service of the first service sends the link call information. For example, the tag exploration apparatus in the cloud server transfers the tag of the first service to the related service of the first service, and the tag exploration apparatus sends the link call information of the related service. The link call information may be sent by the tag exploration apparatus to the data storage apparatus in the cloud server.

In a possible implementation, the related service of the first service further sends the tag of the first service. For example, the related service of the first service aggregates the link call information and the tag of the first service to obtain aggregation information, and the related service of the first service sends the aggregation information. Therefore, when there are a plurality of first services, link information reported by a related service of a same first service can be determined based on the tag of the first service in the aggregation information. In addition, when the key in the tag that is of the first service and that is sent to the upstream service is different from the key in the tag that is of the first service and that is sent to the downstream service, it can be determined, based on the tag of the first service in the aggregation information, whether the aggregation information is aggregation information sent by the upstream service or aggregation information sent by the downstream service. For example, the sent aggregation information is as follows:

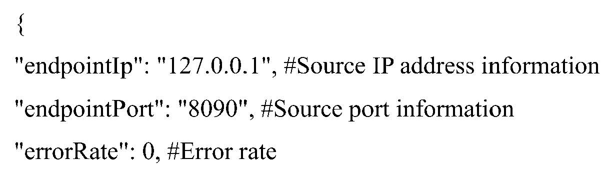

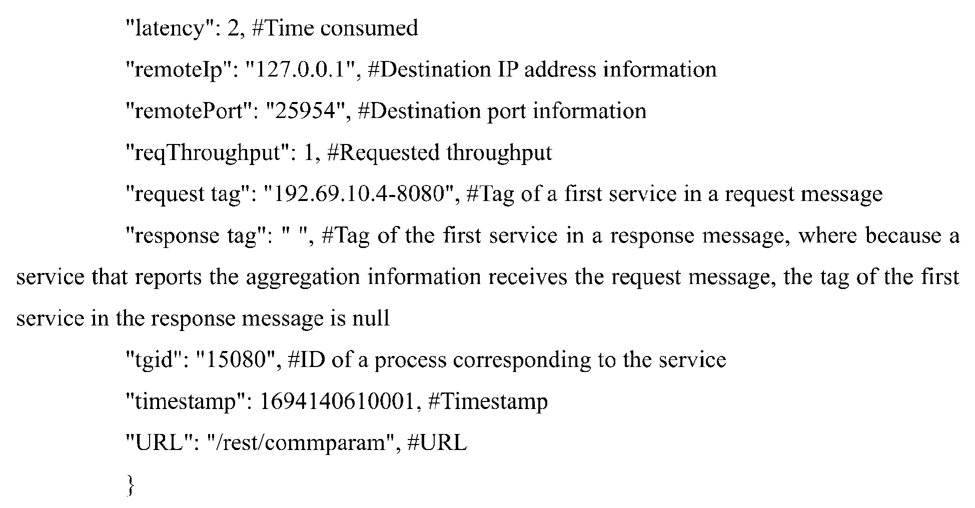

In a possible implementation, the tag exploration apparatus sends information to the data storage apparatus by using kafka (a zookeeper-based message system). The sent information includes the link call information or the aggregation information, and the aggregation information is obtained by aggregating the link call information and the tag of the first service. For example, the cloud server includes a graph database, there are a plurality of related services, and after obtaining the link call information of the related service of the first service, the method further includes: storing link call information of the plurality of related services in the graph database in a sequence of obtaining the link call information of the plurality of related services; and obtaining, based on the link call information, a topology diagram corresponding to the first service includes: when a quantity of the link call information stored in the graph database is greater than or equal to two, reading the stored link call information from the graph database, and obtaining, based on the read link call information, the topology diagram corresponding to the first service. In some embodiments, when the related service of the first service sends the aggregation information, in other words, when the related service of the first service further sends the tag of the first service, the aggregation information is stored in the graph database, and the aggregation information is subsequently obtained from the graph database.

Because information stored in the graph database is applicable to generating the topology diagram, when information sent by the related service is stored in the graph database, efficiency of subsequently obtaining the topology diagram based on the information read from the graph database is high. The read information includes but is not limited to the link call information or the aggregation information. In addition, because the information sent by the related service is related only to the first service and the related service of the first service, a data amount of the information sent by the related service is small. Therefore, a small quantity of storage resources are needed for storing the sent information.

S403: Obtain, based on the link call information, the topology diagram corresponding to the first service, and perform fault analysis on the first service based on the topology diagram corresponding to the first service.

In a possible implementation, if the related service of the first service sends the aggregation information, where the aggregation information includes the link call information and the tag of the first service, obtaining, based on the link call information, the topology diagram corresponding to the first service includes: obtaining, based on the link call information in the aggregation information, the topology diagram corresponding to the first service.

In some embodiments, the database in the cloud server stores aggregation information sent by related services of a plurality of services. In this case, the method further includes: obtaining, from the stored plurality of pieces of aggregation information, the aggregation information sent by the related service of the first service. For example, each piece of aggregation information stored in the database is queried based on the tag of the first service. For any piece of aggregation information stored in the database, if the any piece of aggregation information includes the tag of the first service, the any piece of aggregation information is the aggregation information sent by the related service of the first service.

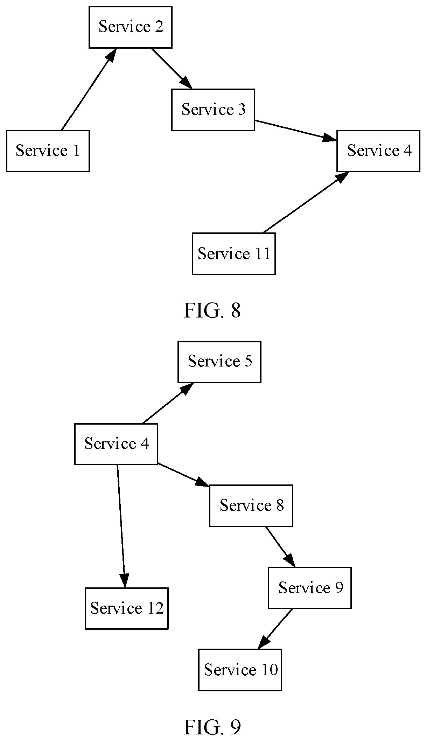

For example, when the tag of the first service includes the key-value pair, the querying, based on the tag of the first service, each piece of aggregation information stored in the database includes: querying, based on the key-value pair, each piece of aggregation information stored in the database. In a possible implementation, when the key in the key-value pair is the response tag, aggregation information found based on the key-value pair is the aggregation information sent by the upstream service of the first service. Therefore, the upstream topology diagram of the first service can be obtained subsequently based on the aggregation information sent by the upstream service of the first service. The upstream topology diagram of the first service includes the first service, the upstream service of the first service, and a call relationship between the first service and the upstream service of the first service. When there are a plurality of upstream services of the first service, the upstream topology diagram further includes a call relationship between the plurality of upstream services of the first service. FIG. 8 is a diagram of an upstream topology diagram according to an embodiment of this application. Refer to FIG. 8. The upstream topology diagram shows the service 1 to the service 4, the service 11, and a call relationship between these services.

Similarly, when the key in the key-value pair is the request tag, aggregation information found based on the key-value pair is the aggregation information sent by the downstream service of the first service. Therefore, the downstream topology diagram of the first service can be obtained subsequently based on the aggregation information sent by the downstream service of the first service. The downstream topology diagram of the first service includes the first service, the downstream service of the first service, and a call relationship between the first service and the downstream service of the first service. When there are a plurality of downstream services of the first service, the downstream topology diagram further includes a call relationship between the plurality of downstream services of the first service. FIG. 9 is a diagram of a downstream topology diagram according to an embodiment of this application. Refer to FIG. 9. The downstream topology diagram shows the service 4, the service 5, the service 8 to the service 10, the service 12, and a call relationship between these services.

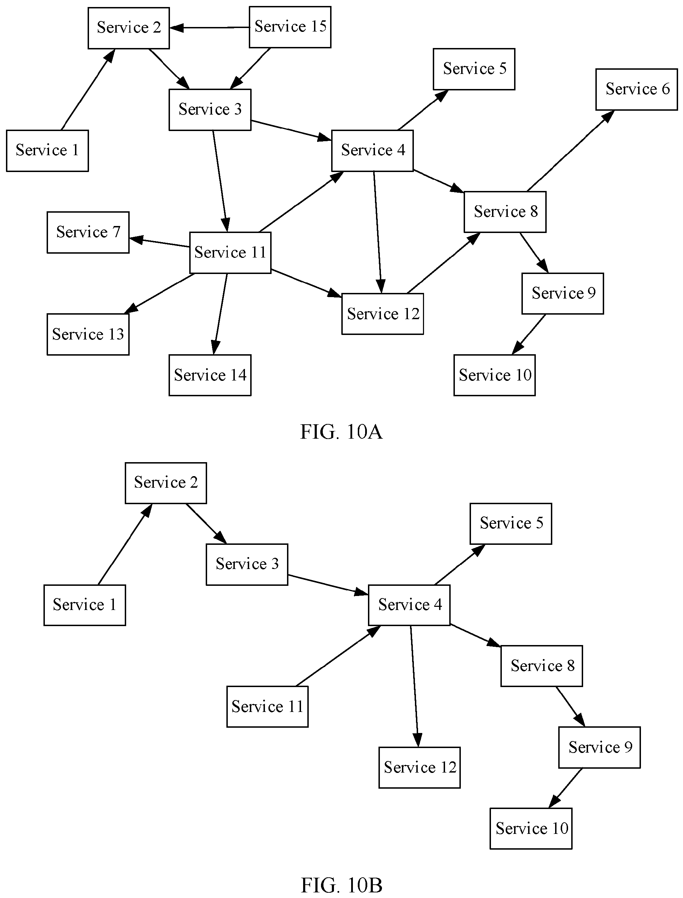

After the aggregation information or the link call information sent by the related service of the first service is obtained, the topology diagram corresponding to the first service may be obtained based on the link call information. The topology diagram corresponding to the first service includes one or both of the following: the upstream topology diagram of the first service and the downstream topology diagram of the first service. FIG. 10A and FIG. 10B are a diagram of a topology diagram corresponding to a first service according to an embodiment of this application. In FIG. 10A and FIG. 10B, an example in which the service 4 is the first service is used. FIG. 10A shows a plurality of services that are run by the cloud server and that have a call relationship, and the call relationship between the plurality of services. FIG. 10B shows a topology diagram corresponding to the service 4.

For example, when the link call information includes the URL, the source IP address information, the source port information, the destination IP address information, and the destination port information, the call relationship between the services and the service type provided by the service can be obtained based on the link call information, to generate the topology diagram. If the link call information further includes one or both of the following: the time consumed and the response result, one or both of the following can be further obtained based on the link call information: time consumed by the service and a response result of the service, and the generated topology diagram can further include one or both of the following: the time consumed by the service and the response result of the service. For example, when the plurality of services run by the cloud server are called through an API, the generated topology diagram is referred to as an API-level topology diagram.

In a possible implementation, the topology diagram corresponding to the first service is obtained only based on the link call information of the related service of the first service. Therefore, in comparison with a manner of constructing a topology diagram based on information about a link including all services in a microservice system, in the method, efficiency of constructing the topology diagram corresponding to the first service is high.

In this embodiment of this application, after the topology diagram corresponding to the first service is obtained, fault analysis can be performed on the first service based on the topology diagram corresponding to the first service. For example, when a fault occurs in the first service, the performing fault analysis on the first service based on the topology diagram corresponding to the first service includes: obtaining first running data of the first service, and obtaining, based on the first running data, a type of the fault that occurs in the first service; and performing fault analysis on the first service based on the type of the fault and the topology diagram corresponding to the first service. The type of the fault that occurs in the first service is obtained, so that a service related to the type can be determined in the topology diagram corresponding to the first service based on the type of the fault, to narrow down a service range for performing fault analysis on the first service, and improve fault analysis efficiency.

For example, the first running data of the first service includes running data corresponding to a service type of the first service, so that whether a fault occurs in the service type can be determined based on the running data corresponding to the service type in the first running data, to obtain a type of the fault that occurs. A manner of determining, based on the running data corresponding to the service type in the first running data, whether the fault occurs in the service type is not limited in this embodiment of this application. For example, if the running data corresponding to the service type is greater than a reference threshold, the fault occurs in the service type; or if the running data corresponding to the service type is less than or equal to a reference threshold, no fault occurs in the service type. The reference threshold may be determined based on experience or an actual requirement.

In a possible implementation, the fault analysis includes determining a service affected by the fault. That is, the fault analysis includes explosion radius determining. In this case, the performing fault analysis on the first service based on the type of the fault and the topology diagram corresponding to the first service includes: determining, based on the type of the fault in a plurality of services corresponding to the topology diagram, the service affected by the fault.

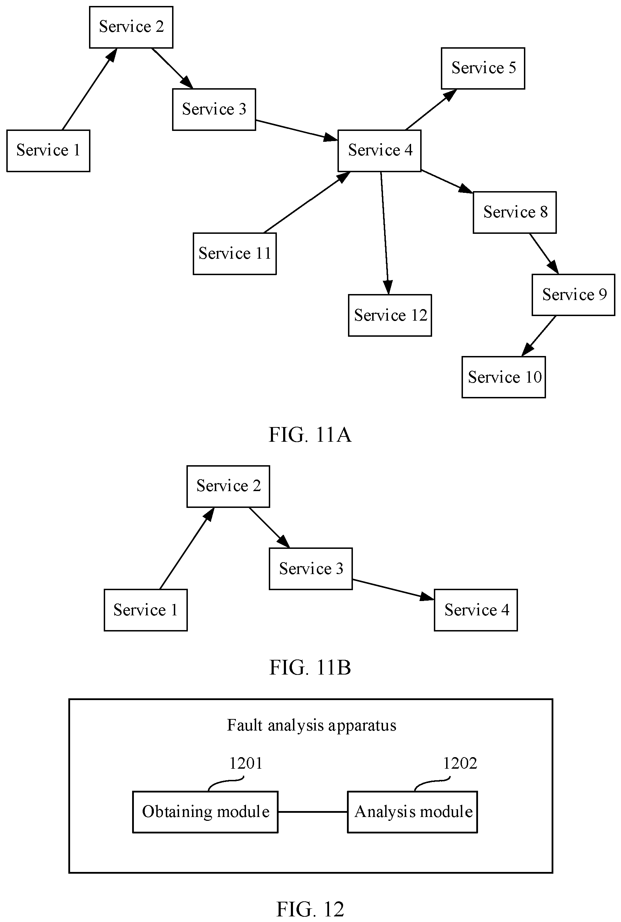

For example, a link including the plurality of services corresponding to the topology diagram can be determined based on a call relationship in the topology diagram. For any formed link, a service type corresponding to the any link can be obtained based on a URL of a service on the any link. Therefore, the determining, based on the type of the fault in the plurality of services corresponding to the topology diagram, the service affected by the fault includes: obtaining, based on the type of the fault from the plurality of services corresponding to the topology diagram, a link corresponding to the type, and determining a service on the link as the service affected by the fault. FIG. 11A and FIG. 11B are a diagram of a determined and affected service according to an embodiment of this application. FIG. 11A is the topology diagram corresponding to the service 4, and FIG. 11B is the determined service affected by the fault. That is, the service 1 to the service 4 are services affected by the fault that occurs in the service 4.

For example, the fault analysis further includes analyzing a cause of the fault. That is, the fault analysis further includes root cause locating. In this case, after the determining, in the plurality of services corresponding to the topology diagram, the service affected by the fault, the method further includes: obtaining second running data of the affected service; and analyzing, based on the first running data and the second running data, the cause of the fault that occurs in the first service. For example, the first running data includes running data corresponding to the type of the fault that occurs in the first service, and the second running data includes running data of the affected service in the type. Therefore, the cause of the fault that occurs in the first service can be analyzed in detail based on the obtained running data, to implement root cause locating. A specific manner of analyzing, based on the obtained running data, the cause of the fault that occurs in the first service is not limited in this embodiment of this application. For example, when the running data includes the response result, if a response result of a service of the affected service is no response, a cause of the fault that occurs in the first service includes that the service does not respond.

In the method provided in this embodiment of this application, for any service in the microservice system, link call information of a related service of the service can be obtained based on a tag of the service, to construct, based on the link call information, a topology diagram corresponding to the service, and perform fault analysis on the service based on the topology diagram. Because only the topology diagram of the service is constructed in the method, efficiency of constructing the topology diagram is high, and efficiency of performing fault analysis on the service based on the topology diagram is high.

In addition, because the topology diagram corresponding to the service is related only to the service and a related service of the service, a quantity of services during fault analysis is small, and fault analysis efficiency is high. In addition, in comparison with the manner of collecting the information about the link including all the services in the microservice system to construct the topology diagram, in the method, only information about a link related to a part of services is collected to construct a topology diagram, and impact on performance of the microservice system is small.

The foregoing describes the fault analysis method in embodiments of this application. Corresponding to the foregoing method, an embodiment of this application further provides a fault analysis apparatus. FIG. 12 is a diagram of a structure of a fault analysis apparatus according to an embodiment of this application. The fault analysis apparatus may be used in a cloud server, and the cloud service is configured to run a plurality of services that have a call relationship. Based on the following plurality of modules shown in FIG. 12, the fault analysis apparatus shown in FIG. 12 can perform all or a part of operations performed by the cloud server shown in FIG. 4. It should be understood that the apparatus may include more additional modules than the shown modules or a part of the shown modules may be omitted. This is not limited in this embodiment of this application. As shown in FIG. 12, the apparatus includes an obtaining module 1201 and an analysis module 1202.

The obtaining module 1201 is configured to obtain a tag of a first service, where the tag identifies the first service, and the first service is any one of the plurality of services. The obtaining module 1201 is further configured to obtain link call information of a related service of the first service based on the tag of the first service, where the related service includes one or both of the following: a second service that is in the plurality of services and that needs to call the first service, and a third service that is in the plurality of services and that needs to be called by the first service. The analysis module 1202 is configured to: obtain, based on the link call information, a topology diagram corresponding to the first service, and perform fault analysis on the first service based on the topology diagram corresponding to the first service.

In a possible implementation, the topology diagram corresponding to the first service is obtained only based on the link call information of the related service of the first service.

In a possible implementation, the analysis module 1202 is configured to: obtain first running data of the first service, and obtain, based on the first running data, a type of a fault that occurs in the first service; and perform fault analysis on the first service based on the type of the fault and the topology diagram corresponding to the first service.

In a possible implementation, the fault analysis includes determining a service affected by the fault, and the analysis module 1202 is configured to determine, based on the type of the fault in a plurality of services corresponding to the topology diagram, the service affected by the fault.

In a possible implementation, the fault analysis further includes analyzing a cause of the fault, and the analysis module 1202 is further configured to: obtain second running data of the affected service; and analyze, based on the first running data and the second running data, the cause of the fault that occurs in the first service.

In a possible implementation, the obtaining module 1201 is further configured to: obtain a tag exploration instruction, where the tag exploration instruction instructs to perform tag exploration on the first service; and perform, based on the tag exploration instruction, the operation of obtaining the tag of the first service.

In a possible implementation, when the related service of the first service includes the second service, the obtaining module 1201 is configured to: send a first response message to the second service, where the first response message is obtained based on a first request message sent by the second service to the first service, and the first response message includes the tag of the first service; and receive link call information fed back by the second service based on the first response message.

In a possible implementation, when the related service of the first service includes the third service, the obtaining module 1201 is configured to: send a second request message to the third service, where the second request message includes the tag of the first service; and receive link call information fed back by the third service based on the second request message.

In a possible implementation, the cloud server includes a graph database, there are a plurality of related services, and the obtaining module 1201 is further configured to store link call information of the plurality of related services in the graph database in a sequence of obtaining the link call information of the plurality of related services. The analysis module 1202 is configured to: when a quantity of the link call information stored in the graph database is greater than or equal to two, read the stored link call information from the graph database, and obtain, based on the read link call information, the topology diagram corresponding to the first service.

In a possible implementation, the tag includes a key-value pair, a key in the key-value pair identifies the tag, and a value in the key-value pair includes IP address information and port information of the first service.

In a possible implementation, the link call information includes one or more of the following: a uniform resource locator, source IP address information, source port information, destination IP address information, destination port information, time consumed, and a response result.

In the apparatus provided in this embodiment of this application, for any service in a microservice system, link call information of a related service of the service can be obtained based on a tag of the service, to construct, based on the link call information, a topology diagram corresponding to the service, and perform fault analysis on the service based on the topology diagram. Because the apparatus constructs only the topology diagram of the service, efficiency of constructing the topology diagram is high, and efficiency of performing fault analysis on the service based on the topology diagram is high.

In addition, because the topology diagram corresponding to the service is related only to the service and a related service of the service, a quantity of services during fault analysis is small, and fault analysis efficiency is high. In addition, in comparison with a manner of collecting information about a link including all services in the microservice system to construct a topology diagram, the apparatus collects only information about a link related to a part of services to construct a topology diagram, and impact on performance of the microservice system is small.

Both the obtaining module 1201 and the analysis module 1202 may be implemented by software, or may be implemented by hardware. For example, the following uses the obtaining module 1201 as an example to describe an implementation of the obtaining module 1201. Similarly, for an implementation of the analysis module 1202, refer to the implementation of the obtaining module 1201.

The modules in the apparatus are used as an example of a software functional module, and the obtaining module 1201 may include code run on a computing instance. The computing instance may include one or more of the following: a physical host (compute device), a virtual machine, and a container. Further, there may be one or more computing instances. For example, the obtaining module 1201 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The modules in the apparatus are used as an example of a hardware functional module, and the obtaining module 1201 may include at least one compute device, for example, a server. Alternatively, the obtaining module 1201 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the obtaining module 1201 may be distributed in a same region, or may be distributed in different regions. The plurality of compute devices included in the obtaining module 1201 may be distributed in a same AZ, or may be distributed in different AZs. Similarly, the plurality of compute devices included in the obtaining module 1201 may be distributed on a same VPC, or may be distributed on a plurality of VPCs. The plurality of compute devices may be any combination of compute devices such as the server, the ASIC, the PLD, the CPLD, the FPGA, and the GAL.

It should be noted that, in another embodiment, the obtaining module 1201 may be configured to perform any step in the fault analysis method, and the analysis module 1202 may be configured to perform any step in the fault analysis method. Steps that the obtaining module 1201 and the analysis module 1202 are responsible for implementing may be specified based on a requirement. The obtaining module 1201 and the analysis module 1202 separately implement different steps in the fault analysis method, to implement all functions of the fault analysis apparatus.

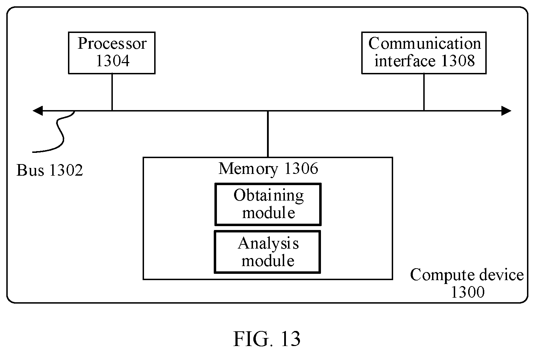

This application further provides a compute device 1300. As shown in FIG. 13, the compute device 1300 includes a bus 1302, a processor 1304, a memory 1306, and a communication interface 1308. The processor 1304, the memory 1306, and the communication interface 1308 communicate with each other through the bus 1302. The compute device 1300 may be a server or a terminal device. It should be understood that quantities of processors and memories in the compute device 1300 are not limited in this application.

The bus 1302 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 13, but it does not indicate that there is only one bus or only one type of bus. The bus 1302 may include a path for transmitting information between the components (for example, the memory 1306, the processor 1304, and the communication interface 1308) of the compute device 1300.

The processor 1304 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 1306 may include a volatile memory (volatile memory), for example, a random access memory (random access memory, RAM). The processor 1304 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1306 stores executable program code, and the processor 1304 executes the executable program code to separately implement functions of the obtaining module and the analysis module, to implement the fault analysis method. In other words, the memory 1306 stores instructions for performing the fault analysis method.

The communication interface 1308 implements communication between the compute device 1300 and another device or a communication network by using a transceiver module, for example, but not limited to a network interface card or a transceiver.

An embodiment of this application further provides a compute device cluster. The compute device cluster includes at least one compute device. The compute device may be a server, for example, a central server, an edge server, a cloud server, or a local server in a local data center. In some embodiments, the compute device may alternatively be a terminal device, for example, a desktop computer, a notebook computer, or a smartphone.

Optionally, for a structure of the at least one compute device included in the compute device cluster, refer to the compute device 1300 shown in FIG. 13. Memories 1306 in one or more compute devices 1300 in the compute device cluster may store same instructions for performing the fault analysis method.

In some possible implementations, the memories 1306 in the one or more compute devices 1300 in the compute device cluster may alternatively separately store a part of instructions for performing the fault analysis method. In other words, a combination of the one or more compute devices 1300 may jointly execute the instructions for performing the fault analysis method.

It should be noted that the memories 1306 in different compute devices 1300 in the compute device cluster may store different instructions separately for performing a part of functions of the fault analysis apparatus. In other words, the instructions stored in the memories 1306 in different compute devices 1300 may implement functions of one or both of the obtaining module and the analysis module.

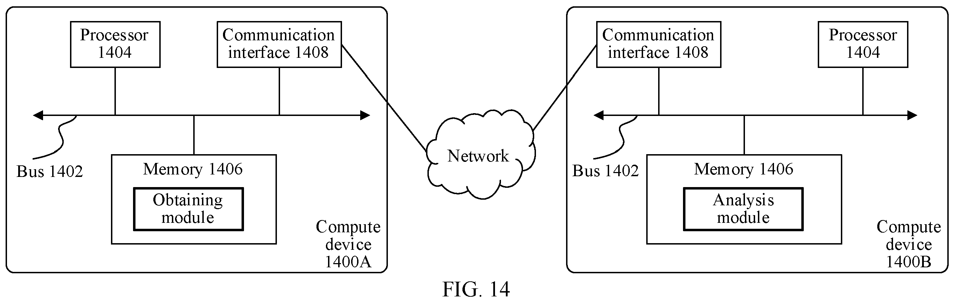

In some possible implementations, the one or more compute devices in the compute device cluster may be connected through a network. The network may be a wide area network, a local area network, or the like. FIG. 14 shows a possible implementation. As shown in FIG. 14, two compute devices 1400A and 1400B are connected through a network. Specifically, each compute device is connected to the network through a communication interface of the compute device. In this possible implementation, the compute devices 1400A and 1400B include a bus 1402, a processor 1404, a memory 1406, and a communication interface 1408. The memory 1406 in the compute device 1400A stores instructions for performing a function of an obtaining module. In addition, the memory 1406 in the compute device 1400B stores instructions for performing a function of an analysis module.

A connection manner between compute device clusters shown in FIG. 14 may be that, in consideration of that a topology diagram corresponding to a first service needs to be obtained in the fault analysis method provided in this application, it is considered that the function implemented by the analysis module is performed by the compute device 1400B.

It should be understood that a function of the compute device 1400A shown in FIG. 14 may alternatively be implemented by a plurality of compute devices 1400. Similarly, a function of the compute device 1400B may alternatively be implemented by the plurality of compute devices 1400.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive and send a signal. When the processor executes the instructions stored in the memory, the processor is caused to perform any one of the foregoing fault analysis methods.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative descriptions, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer program product including instructions. The computer program product may be a software or program product that includes instructions and that can run on a compute device or can be stored in any usable medium. When the computer program product runs on at least one compute device, the at least one compute device is caused to perform any one of the foregoing fault analysis methods.

An embodiment of this application further provides a computer-readable storage medium. The computer-readable storage medium may be any usable medium that can be stored by a compute device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and when the instructions are executed by the compute device, the compute device performs any one of the foregoing fault analysis methods.

An embodiment of this application further provides a chip. The chip includes a processor, and the processor is configured to invoke, from a memory, instructions stored in the memory and run the instructions, to cause a communication device on which the chip is installed to perform any one of the foregoing fault analysis methods. For example, the chip further includes an input interface, an output interface, and the memory. The input interface, the output interface, the processor, and the memory are connected to each other through an internal connection path.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

To clearly describe the interchangeability of hardware and software, the steps and composition of embodiments have been generally described in the foregoing descriptions based on functions. Whether these functions are performed by hardware or software depends on particular applications and design constraints of the technical solutions. A person of ordinary skill in the art may use different methods to implement the described functions for each particular application, but it should not be considered that the implementation goes beyond the scope of this application.

Computer program code for implementing the method in embodiments of this application may be written in one or more programming languages. The computer program code may be provided for a processor of a general-purpose computer, a dedicated computer, or another programmable fault analysis apparatus, so that when the program code is executed by the computer or another programmable fault analysis apparatus, a function/operation specified in the flowchart and/or the block diagram is implemented. The program code may be executed entirely on a computer, partially on a computer, as an independent software package, partially on a computer and partially on a remote computer, or entirely on a remote computer or server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It may be clearly understood by a person skilled in the art that, for the purpose of convenient and brief description, for detailed working processes of the foregoing described compute device and module, refer to corresponding processes in the foregoing method embodiments. Details are not described herein again.

In several embodiments provided in this application, it should be understood that the disclosed apparatus, device, and method may be implemented in other manners. For example, the apparatus embodiments described above are merely examples. For example, division into the modules is merely logical function division and there may be other division manners during actual implementation. For example, a plurality of modules or components may be combined or may be integrated into another system, or some features may be ignored or not performed. In addition, the displayed or discussed mutual couplings or direct couplings or communication connections may be indirect couplings or communication connections implemented by some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. A part or all of the modules may be selected based on actual requirements to implement the objectives of the solutions of embodiments of this application.

In addition, functional modules in embodiments of this application may be integrated into one module, each of the modules may exist alone physically, or two or more modules may be integrated into one module. The integrated module may be implemented in a form of hardware, or may be implemented in a form of a software functional module.

In this application, terms such as "first" and "second" are used to distinguish between same items or similar items that have basically same effects and functions. It should be understood that there is no logical or time sequence dependency between "first", "second", and "nth", and a quantity and an execution sequence are not limited. It should be further understood that, although the following descriptions use terms such as "first" and "second" to describe various elements, these elements should not be limited by the terms. These terms are merely used to distinguish one element from another element. For example, a first service may be referred to as a second service without departing from the scope of various examples, and similarly, the second service may be referred to as the first service.

It should be further understood that sequence numbers of processes do not mean execution sequences in various embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of services means two or more services. The terms "system" and "network" are often used interchangeably in this specification.

It should be understood that the terms used in the descriptions of the various examples in this specification are merely intended to describe specific examples, and are not intended to constitute a limitation. For example, "a ("a" and "an")" and "the" of singular forms used in the descriptions of the various examples and the appended claims are intended to include plural forms, unless otherwise specified in the context clearly.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or groups thereof not excluded.

It should be further understood that, according to the context, the phrase "if it is determined..." or "if [the stated condition or event] is detected" may be interpreted to mean "when it is determined..." or "in response to determining..." or "when [the stated condition or event] is detected" or "in response to detection of [the stated condition or event]".

It should be understood that determining B based on A does not mean that B is determined based only on A. B may alternatively be determined based on A and/or other information.

It should be further understood that "one embodiment", "an embodiment", and "a possible implementation" mentioned throughout the specification mean that a specific feature, structure, or characteristic related to the embodiment or implementation is included in at least one embodiment of this application. Therefore, "in one embodiment", "in an embodiment", or "a possible implementation" appearing throughout the specification may not necessarily mean a same embodiment. In addition, these particular features, structures, or characteristics may be combined in one or more embodiments in any appropriate manner.

The foregoing embodiments are merely intended to describe the technical solutions of this application, but not to limit this application. Although this application is described in detail with reference to the foregoing embodiments, a person of ordinary skill in the art should understand that modifications can still be made to the technical solutions described in the foregoing embodiments, or equivalent replacements can still be made to a part of technical features thereof, and such modifications or replacements do not cause the essence of the corresponding technical solutions to depart from the protection scope of the technical solutions of embodiments of this application.

## Claims

1. A fault analysis method, wherein the method is applied to a cloud server, the cloud server is configured to run a plurality of services that have a call relationship, and the method comprises:
obtaining a tag of a first service, wherein the tag identifies the first service, and the first service is any one of the plurality of services;
obtaining link call information of a related service of the first service based on the tag of the first service, wherein the related service comprises one or both of the following: a second service that is in the plurality of services and that needs to call the first service, or a third service that is in the plurality of services and that needs to be called by the first service; and
obtaining, based on the link call information, a topology diagram corresponding to the first service, and performing fault analysis on the first service based on the topology diagram corresponding to the first service.

2. The method according to claim 1, wherein the performing fault analysis on the first service based on the topology diagram corresponding to the first service comprises:
obtaining first running data of the first service, and obtaining, based on the first running data, a type of a fault that occurs in the first service; and
performing fault analysis on the first service based on the type of the fault and the topology diagram corresponding to the first service.

3. The method according to claim 2, wherein the fault analysis comprises determining a service affected by the fault, and the performing fault analysis on the first service based on the type of the fault and the topology diagram corresponding to the first service comprises:
determining, based on the type of the fault in a plurality of services corresponding to the topology diagram, the service affected by the fault.

4. The method according to claim 3, wherein the fault analysis further comprises analyzing a cause of the fault that occurs, and after the determining, in the plurality of services corresponding to the topology diagram, the service affected by the fault, the method further comprises:
obtaining second running data of the affected service; and
analyzing, based on the first running data and the second running data, the cause of the fault that occurs in the first service.

5. The method according to any one of claims 1 to 4, wherein the obtaining the tag of the first service further comprises:
obtaining a tag exploration instruction, wherein the tag exploration instruction instructs to perform tag exploration on the first service; and
performing, based on the tag exploration instruction, the operation of obtaining the tag of the first service.

6. The method according to any one of claims 1 to 5, wherein when the related service of the first service comprises the second service, the obtaining the link call information of the related service of the first service based on the tag of the first service comprises:
sending a first response message to the second service, wherein the first response message is obtained based on a first request message sent by the second service to the first service, and the first response message comprises the tag of the first service; and
receiving link call information fed back by the second service based on the first response message.

7. The method according to any one of claims 1 to 6, wherein when the related service of the first service comprises the third service, the obtaining the link call information of the related service of the first service based on the tag of the first service comprises:
sending a second request message to the third service, wherein the second request message comprises the tag of the first service; and
receiving link call information fed back by the third service based on the second request message.

8. The method according to any one of claims 1 to 7, wherein the cloud server comprises a graph database, there are a plurality of related services, and after the obtaining the link call information of the related service of the first service, the method further comprises:
storing link call information of the plurality of related services in the graph database in a sequence of obtaining the link call information of the plurality of related services; and
the obtaining, based on the link call information, the topology diagram corresponding to the first service comprises:
when a quantity of the link call information stored in the graph database is greater than or equal to two, reading the stored link call information from the graph database, and obtaining, based on the read link call information, the topology diagram corresponding to the first service.

9. The method according to any one of claims 1 to 8, wherein the tag comprises a key-value pair, a key in the key-value pair identifies the tag, and a value in the key-value pair comprises internet protocol IP address information and port information of the first service.

10. The method according to any one of claims 1 to 9, wherein the link call information comprises one or more of the following: a uniform resource locator, source internet protocol IP address information, source port information, destination IP address information, destination port information, time consumed, and a response result.

11. A fault analysis apparatus, wherein the apparatus is used in a cloud server, the cloud server is configured to run a plurality of services that have a call relationship, and the apparatus comprises:
an obtaining module, configured to obtain a tag of a first service, wherein the tag identifies the first service, and the first service is any one of the plurality of services, wherein
the obtaining module is further configured to obtain link call information of a related service of the first service based on the tag of the first service, wherein the related service comprises one or both of the following: a second service that is in the plurality of services and that needs to call the first service, and a third service that is in the plurality of services and that needs to be called by the first service; and
an analysis module, configured to: obtain, based on the link call information, a topology diagram corresponding to the first service, and perform fault analysis on the first service based on the topology diagram corresponding to the first service.

12. The apparatus according to claim 11, wherein the analysis module is configured to: obtain first running data of the first service, and obtain, based on the first running data, a type of a fault that occurs in the first service; and perform fault analysis on the first service based on the type of the fault and the topology diagram corresponding to the first service.

13. The apparatus according to claim 12, wherein the fault analysis comprises determining a service affected by the fault, and the analysis module is configured to determine, based on the type of the fault in a plurality of services corresponding to the topology diagram, the service affected by the fault.

14. The apparatus according to claim 13, wherein the fault analysis further comprises analyzing a cause of the fault that occurs, and the analysis module is further configured to: obtain second running data of the affected service; and analyze, based on the first running data and the second running data, the cause of the fault that occurs in the first service.

15. The apparatus according to any one of claims 11 to 14, wherein the obtaining module is further configured to: obtain a tag exploration instruction, wherein the tag exploration instruction instructs to perform tag exploration on the first service; and perform, based on the tag exploration instruction, the operation of obtaining the tag of the first service.

16. The apparatus according to any one of claims 11 to 15, wherein when the related service of the first service comprises the second service, the obtaining module is configured to: send a first response message to the second service, wherein the first response message is obtained based on a first request message sent by the second service to the first service, and the first response message comprises the tag of the first service; and receive link call information fed back by the second service based on the first response message.

17. The apparatus according to any one of claims 11 to 16, wherein when the related service of the first service comprises the third service, the obtaining module is configured to: send a second request message to the third service, wherein the second request message comprises the tag of the first service; and receive link call information fed back by the third service based on the second request message.

18. The apparatus according to any one of claims 11 to 17, wherein the cloud server comprises a graph database, there are a plurality of related services, and the obtaining module is further configured to store link call information of the plurality of related services in the graph database in a sequence of obtaining the link call information of the plurality of related services; and the analysis module is configured to: when a quantity of the link call information stored in the graph database is greater than or equal to two, read the stored link call information from the graph database, and obtain, based on the read link call information, the topology diagram corresponding to the first service.

19. The apparatus according to any one of claims 11 to 18, wherein the tag comprises a key-value pair, a key in the key-value pair identifies the tag, and a value in the key-value pair comprises internet protocol IP address information and port information of the first service.

20. The apparatus according to any one of claims 11 to 19, wherein the link call information comprises one or more of the following: a uniform resource locator, source internet protocol IP address information, source port information, destination IP address information, destination port information, time consumed, and a response result.

21. A compute device cluster, wherein the compute device cluster comprises at least one compute device, and each compute device comprises a processor and a memory; and
a processor of the at least one compute device is configured to execute instructions stored in a memory of the at least one compute device, to cause the compute device cluster to perform the fault analysis method according to any one of claims 1 to 10.

22. A computer-readable storage medium, wherein the computer-readable storage medium comprises computer program instructions, and when the computer program instructions are executed by a compute device cluster, the compute device cluster performs the fault analysis method according to any one of claims 1 to 10.

23. A computer program product comprising instructions, wherein when the instructions are run by a compute device cluster, the compute device cluster is caused to perform the fault analysis method according to any one of claims 1 to 10.
